Europäisches Patentamt

(19) European Patent Office

Office européen des brevets

(11) Numéro de publication: **0 043 607**
**B1**

(12) **FASCICULE DE BREVET EUROPEEN**

(45) Date de publication du fascicule du brevet:
01.08.84

(21) Numéro de dépôt: 81200653.4

(22) Date de dépôt: 12.06.81

(51) Int. Cl.³: **C 21 B 5/00,** B 65 G 53/46,
F 23 K 3/02

(54) Procédé et installation de transport pneumatique uniforme de matières pulvérulentes et application à l'injection de combustibles solides dans un four à cuve.

(30) Priorité: 09.07.80 LU 82600

(43) Date de publication de la demande:
13.01.82 Bulletin 82/2

(45) Mention de la délivrance du brevet:
01.08.84 Bulletin 84/31

(84) Etats contractants désignés:
DE FR

(56) Documents cités:
DE - A - 1 756 496
FR - A - 617 195
FR - A - 1 322 836
GB - A - 361 573
US - A - 2 539 109
US - A - 3 384 420

(73) Titulaire: **PAUL WURTH S.A., 32 rue d'Alsace,
L-1122 Luxembourg (LU)**

(72) Inventeur: **Ulveling, Léon, rue Dr. Jos Peffer, Howald
(LU)**
Inventeur: **Thillen, Guy, 20 rue du Palais, Diekirch (LU)**
Inventeur: **Mailliet, Pierre, 1 allée Drosbach, Howald (LU)**
Inventeur: **Schmit, Charles, 14 rue des Champs, Aspelt
(LU)**

(74) Mandataire: **Meyers, Ernest et al, Office de Brevets
Freylinger & Associés 46 rue du Cimetière B.P. 1153,
L-1011 Luxembourg (LU)**

ACTORUM AG

## Description

La présente invention concerne un procédé de transport pneumatique uniforme de matières pulvérulentes qui sont introduites dans un fluide de propulsion au moyen d'un sas à rotor alvéolaire en dirigeant le fluide de propulsion à travers le rotor parallèlement à l'axe de rotation de celui-ci. L'invention concerne également une installation pour la mise en œuvre de ce procédé et, à titre d'application, un procédé et une installation d'injection de combustibles solides dans un four à cuve.

La demande de brevet européen 80 103 206 décrit un procédé et une installation de dosage et de transport par voie pneumatique de matières solides vers une enceinte sous pression, notamment pour l'injection de combustibles solides dans un haut fourneau. D'après cette demande de brevet, chaque tuyère, ou chaque couple de tuyères, est alimentée séparément à partir d'un réservoir recevant les quantités nécessaires de poudre de charbon ou de poudre de lignite. Le transport de cette poudre entre ce réservoir et le haut fourneau est effectué par voie pneumatique et il s'est avéré que le moyen le plus sûr et le plus faible pour prélever des quantités déterminées de matières dans ce réservoir est un sas à rotor alvéolaire, bien connu en soi. Un tel sas est constitué essentiellement d'un rotor cylindrique pourvu sur sa périphérie d'un certain nombre de palettes définissant un nombre correspondant d'alvéoles. Ce rotor tourne de manière étanche à l'intérieur d'un boîtier et la matière alimentée par le dessus est entraînée par les alvéoles vers le bas dans un courant d'air sous pression servant de fluide de propulsion. Cet air de propulsion entraîne la matière au fur et à mesure qu'elle est débitée par les alvéoles.

Toutefois, dans l'application précitée, il a été constaté que les alvéoles sont vidées instantanément dès qu'elles pénètrent dans l'air sous pression de la conduite pneumatique. Autrement dit, dès qu'une alvéole est vidée de son contenu, il existe un temps mort durant lequel la matière pulvérulente n'est pas admise dans la conduite pneumatique et qui dure jusqu'à ce que la prochaine alvéole se présente. Il en résulte que le combustible pulvérulent est injecté dans le haut fourneau par petits paquets se présentant de façon périodique suivant la vitesse de rotation du rotor. Dans l'application concernée, cette vitesse est telle que les alvéoles sectionnent le passage pneumatique à la cadence de une alvéole par seconde et le rythme d'apparition de ces paquets de combustible est également de un par seconde.

La cause de ce phénomène est le fait qu'il faut utiliser une vitesse et une pression élevées dans la conduite pneumatique. La vitesse ne peut pas être inférieure à 18 m/sec pour éviter les dépôts et empêcher les retours de flammes depuis le haut fourneau, tandis que la pression doit être supérieure à la contre-pression régnant à l'intérieur du four. Dans d'autres applications que celle visée par la présente invention, ce phénomène n'a pas de conséquence. En effet, ou bien, le phénomène n'existe pas par suite d'une pression et d'une vitesse inférieures, ou bien il existe également et alors on peut, soit l'éliminer en réduisant, par exemple la pression, soit le laisser subsister lorsqu'il s'agit simplement de transporter des produits pulvérulents, car, dans ce cas, il importe peu que la matière soit propulsée de façon continue ou par petits paquets.

Par contre, dans l'application visée, c'est-à-dire l'injection de poudre de charbon ou de poudre de lignite dans un haut fourneau, il faut rappeler que cette poudre doit être brûlée dans le four et que, à cet effet, on injecte, de manière continue à travers les porte-vent, une certaine quantité d'oxygène pour l'entretien du processus de combustion. Cette quantité d'oxygène, ou d'air enrichi, est, bien entendu, calculée en fonction de la quantité de combustible, c'est-à-dire qu'on injecte la quantité nécessaire et suffisante pour brûler la quantité de combustible qu'on a l'intention d'injecter dans le four.

Or, si la lignite ou le charbon sont injectés par petits paquets, l'oxygène qui est injecté durant les temps morts s'écoulant entre l'apparition de deux paquets n'est pas utilisé et pénètre dans la masse à l'intérieur du four. De même, lors de l'injection d'un paquet de combustible, la masse de celui-ci est trop abandante pour la quantité d'oxygène injectée et le combustible n'est pas complètement brûlé. En résumé, on peut dire qu'au total, on injecte toujours la même quantité de combustible pour laquelle la quantité d'oxygène a été calculée mais que, par le fait de l'injection pulsatoire du combustible, il y a alternativement un excés et un manque de combustible en présence d'une quantité constante d'oxygène.

Le but de la présente invention est de prévoir un nouveau procédé permettant la suppression de ce transport pulsatoire dans la voie pneumatique, ainsi qu'une installation pour la mise en œuvre de ce procédé.

A cet effet, le procédé selon l'invention est essentiellement caractérisé en ce qu'en aval du sas à rotor alvéolaire, on sépare la matière pulvérulente du fluide de propulsion par force centrifuge dans un mouvement tourbillonnaire descendant qu'on impose au courant pneumatique et on l'y rajoute de manière progressive et uniforme, cette matière pulvérulente étant ensuite réentraînée par le fluide de propulsion.

L'installation pneumatique prévue par l'invention pour la mise en œuvre de ce procédé comporte un sas à rotor alvéolaire pour distribuer des quantités dosées de matière pulvérulente, une conduite de fluide de propulsion traversant le rotor parallèlement à l'axe de rotation de celui-ci pour entraîner la matière pulvérulente au fur et à mesure qu'elle est débitée par les alvéoles du rotor et d'une conduite de transport pneumatique reliant le sas à rotor alvéolaire à un poste de réception de la matière pulvérulente, caractérisée par une enceinte de séparation insérée dans la conduite de transport pneumatique en aval du sas à rotor alvéolaire, cette enceinte comprenant une cuve cylindrique à axe vertical dans laquelle la conduite pneumatique pénètre tangentiellement dans la partie supérieure.

Selon une autre caractéristique de l'invention ladite enceinte comporte une section tronconique formant la transition entre la cuve cylindrique et la conduite quittant l'enceinte. L'angle de conicité de cette section tronconique est approximativement de 20°.

Quoique le procédé et l'installation puissent être appliqués partout où le besoin se manifeste pour supprimer cet effet pulsatoire dans une conduite de transport pneumatique, l'invention vise, à titre d'application avantageuse, l'injection de combustibles solides dans un four à cuve.

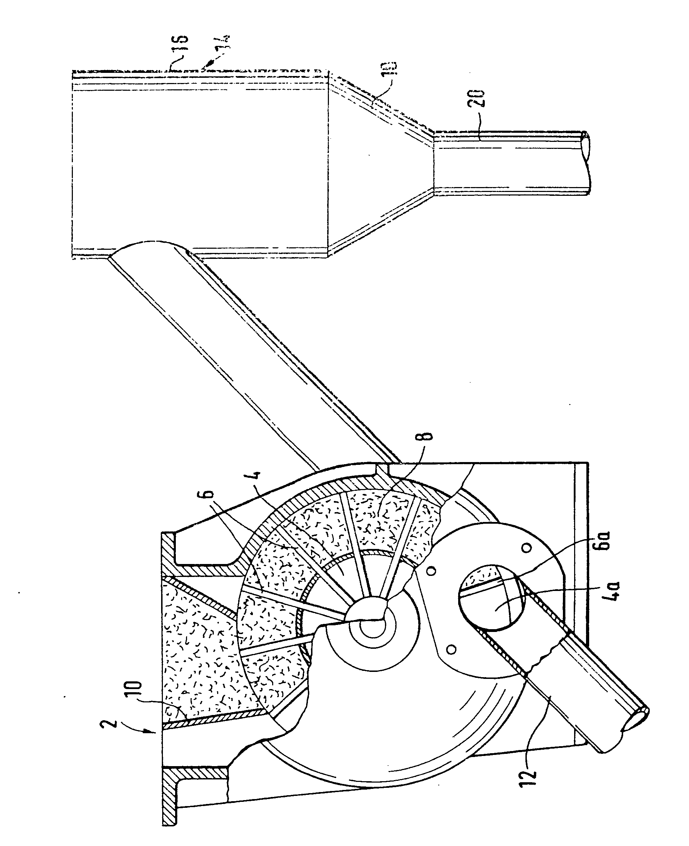

D'autres particularités et caractéristiques ressortiront de la description détaillée d'un mode de réalisation avantageux présenté ci-dessous, à titre d'illustration, en référence à la figure unique, montrant schématiquement, et partiellement en coupe, un sas à rotor alvéolaire traversé par une conduite pneumatique pourvue d'une enceinte de séparation selon l'invention.

Le sas à rotor alvéolaire montré sur cette figure est désigné globalement par la référence 2. Ce sas comporte essentiellement un rotor 4 tournant autour d'un axe perpendiculaire à la figure et pourvu à sa périphérie d'une série de palettes 6 définissant entre elles des alvéoles 8. De la matière pulvérulente, par exemple de la poudre de lignite ou de la poudre de charbon, s'accumule par gravité dans une trémie supérieure 10 et remplit chacune des alvéoles 8 au fur et à mesure de la rotation du rotor 4. Cette rotation se fait, dans le cas de l'exemple montré sur la figure, dans le sens des aiguilles d'une montre. Une conduite pneumatique 12 traverse la partie inférieure du sas 2, parallèlement à l'axe de rotation du rotor 4 et entraîne la matière pulvérulente au fur et à mesure du passage des palettes 6. Or, à cause de la vitesse et de la pression élevées du fluide de propulsion circulant dans la conduite 12, les alvéoles 4 sont vidées instantanément de leur contenu dès qu'elles se présentent dans le courant de la conduite 12. Dans le cas de la figure, la palette représentée par 6a vient de pénétrer dans le courant pneumatique et l'alvéole qu'elle précède est en train d'être vidée, tandis que l'alvéole 4a précédant la palette 6a est déjà complètement vidée. Dès que l'alvéole se trouvant derrière cette palette 6a est vidée, il se passera un temps mort durant lequel aucune matière pulvérulente n'est entraînée dans le courant pneumatique et qui durera jusqu'à ce que l'alvéole suivante se présente dans le passage du courant.

Dans le but d'uniformiser le transport pneumatique de la matière pulvérulente et pour supprimer cet effet pulsatoire, il est prévu dans la conduite 12, en aval du sas 2, une enceinte de séparation 14. Cette enceinte 14 est constituée d'une cuve cylindrique 16, prolongée, vers le bas, par une section tronconique 18 à partir de laquelle la conduite pneumatique 20 quitte cette enceinte 14. La conduite pneumatique 12 doit pénétrer tangentiellement dans la partie supérieure de l'enceinte 14 afin de provoquer un mouvement tourbillonnaire à l'intérieur provoquant la séparation de la matière pulvérulente du fluide de propulsion sous l'effet de la force centrifuge. Cet effet est, par conséquent, comparable à celui d'un cyclone généralement utilisé pour le nettoyage d'un gaz en vue d'en extraire les particules solides.

Sous l'effet combiné de la force centrifuge et de la force de gravitation les particules de la matière pulvérulente descendent le long des parois de la cuve 16 et de la partie tronconique 18 pour être à nouveau entraînées dans la conduite 20 avec le fluide de propulsion. Etant donné toutefois qu'il se forme à l'intérieur de la cuve 16 un étalement de la matière pulvérulente amenée par petits paquets, l'extraction à travers la conduite pneumatique 20 se passe progressivement et uniformément. Autrement dit, le chargement discontinu de la conduite pneumatique 12 en aval du sas 2 est nivelé dans la conduite 20, grâce à l'effet de l'enceinte de séparation 14.

Les dimensions d'une enceinte 14 pour une conduite pneumatique de 40 mm de diamètre peuvent être les suivantes:

Hauteur de la cuve 16:400 mm

Diamètre de la cuve 16:300 mm

Angle de conicité de la partie tronconique 18:20°.

**Revendications**

1. Procédé de transport pneumatique uniforme de matières pulvérulentes qui sont introduites dans un fluide de propulsion au moyen d'un sas à rotor alvéolaire en dirigeant le fluide de propulsion à travers le rotor parallèlement à l'axe de rotation de celui-ci, caractérisé en ce que, en aval du sas à rotor alvéolaire, on sépare la matière pulvérulente du fluide de propulsion par force centrifuge dans un mouvement touribillonnaire descendant qu'on impose au courant pneumatique et on l'y rajoute de manière progressive et uniforme, cette matière pulvérulente étant ensuite réentraînée par le fluide de propulsion.

2. Installation pour la mise en œuvre du procédé selon la revendication 1, comprenant un sas à rotor alvéolaire pour distribuer des quantités dosées de matières pulvérulentes, une conduite de fluide de propulsion traversant le rotor parallèlement à l'axe de rotation de celui-ci pour entraîner la matière pulvérulente au fur et à mesure qu'elle est débitée par les alvéoles du rotor et une conduite de transport pneumatique reliant le sas à rotor alvéolaire à un poste de réception de la matière pulvérulente, caractérisée par une enceinte de séparation (14) insérée dans la conduite de transport pneumatique (12) en aval du sas à rotor alvéolaire (2), cette enceinte (14) comprenant une cuve cylindrique (16) à axe vertical dans laquelle la conduite pneumatique (12) pénètre tangentiellement dans la partie supérieure.

3. Installation selon la revendication 2, caractérisée en ce que ladite enceinte (14) comporte une section tronconique (18) formant la transition entre la cuve cylindrique (16) et la conduite (20) quittant l'enceinte (14).

4. Installation selon la revendication 3, caractérisée en ce que l'angle de conicité de la section tronconique (18) est de 20°.

**Patentansprüche**

1. Verfahren zur uniformen pneumatischen Förderung feinkörniger Feststoffe, welche einem Förderfluid mittels einer Zellenradschleuse zugegeben werden, in dem das Förderfluid durch das Zellenrad, parallel zu dessen Drehachse, hindurchgeführt wird, dadurch gekennzeichnet, dass stromabwärts von der Zellenradschleuse die feinkörnigen Feststoffe durch Fliehkraft in einer dem Luftstrom aufgezwungenen absteigenden Wirbelbewegung vom Förderfluid getrennt und ihm wieder progressiv und uniform zugegeben werden, wobei diese feinkörnigen Feststoffe so dann wieder vom Förderfluid mitgenommen werden.

2. Anlage zur Durchführung des Verfahrens nach Anspruch 1 mit einer Zellenradschleuse zur Einspeisung der dosierten Mengen von feinkörnigen Feststoffen, einer Leitung für das das Zellenrad parallel zu dessen Drehachse durchquerende Förderfluid für die Mitnahme der feinkörnigen Feststoffe im Rhythmus ihrer Abgabe durch die Zellen des Zellenrades und einer pneumatischen Förderleitung, welche die Zellenradschleuse mit einer Empfangsstation für die feinkörnigen Feststoffe verbindet, gekennzeichnet durch einen stromabwärts von der Zellenradschleuse (2) in die pneumatische Transportleitung (12) eingefügten Trennbehälter (14), wobei dieser Behälter (14) einen zylindrischen Trog (16) mit vertikaler Achse aufweist, in welchen die pneumatische Leitung oben tangentiell einmündet.

3. Anlage nach Anspruch 2, dadurch gekennzeichnet, dass der genannte Behälter (14) einen kegelstumpfförmigen Abschnitt (18) aufweist, welcher den Übergang zwischen dem zylindrischen Trog (16) und der den Behälter (14) verlassenden Leitung (20) bildet.

4. Vorrichtung nach Anspruch 3, dadurch gekennzeichnet, dass der Kegelwinkel des kegelstumpfförmigen Abschnitts (18) 20° beträgt.

**Claims**

1. Process for the uniform pneumatic conveyance of finely divided solids which are introduced into propulsion fluid by means of a chamber with a honeycombed rotor, the propulsion fluid being guided through the rotor in a direction parallel to the rotation axis of the latter, characterized by the fact that «down-stream» from the honeycombed-rotor chamber the solid material is separated from the propulsion fluid by centrifugal force in an eddying descending movement imparted to the pneumatic current and returned to it in a progressive and uniform manner, and thereafter carried along with the propulsion fluid.

2. Installation for the performance of the process described in claim 1, comprising a chamber with a honeycombed rotor serving to distribute measured quantities of pulverulent material, a pipe for propulsion fluid, passing through the rotor in a direction parallel to the latter's rotation axis and serving to take up the pulverulent materials as and when it is delivered by the cells of the rotor and carry it along, and a pneumatic transport pipe connecting the honeycombed-rotor chamber to a receiving station for the pulverulent material, characterized by a separating chamber (14) connected into the pneumatic transport pipe (12) donwnstream from the honeycombed-rotor chamber (2), this enclosure (14) comprising a cylindrical vat (16), with a vertical axis into the upper portion of which the pneumatic pipe (12) penetrates tangentially.

3. Installation in accordance with claim 2, characterized by the fact that the said enclosure (14) comprises a section (18) of the shape of a truncated cone, forming the transition between the cylindrical vat (16) and the pipe (20) emerging from the enclosure (14).

4. Installation in accordance with claim 3, characterized by the fact that the angle of conicity of the frusto-conical section (18) is 20°.